# EUROPEAN PATENT SPECIFICATION

(11) **EP 1 422 419 B1**
(45) Date of publication and mention of the grant of the patent: **29.12.2010**
(21) Application number: 02760768.8
(22) Date of filing: 28.08.2002
(51) Int. Cl.: F02M 69/32, F02D 9/10

(54) **SEAL STRUCTURE OF BYPASS INTAKE VOLUME CONTROL DEVICE**
DICHTUNGSKONSTRUKTION FÜR UMGEHUNGSEINLASSVOLUMENSTEUERVORRICHTUNG
STRUCTURE D'ETANCHEITE D'UN DISPOSITIF DE REGULATION DE VOLUME D'ADMISSION DE DERIVATION

(30) Priority: 31.08.2001 JP 2001264692
(43) Date of publication of application: 26.05.2004
(73) Proprietor: Keihin Corporation, Tokyo 163-0539 (JP); HONDA GIKEN KOGYO KABUSHIKI KAISHA, Minato-ku, Tokyo 107-8556 (JP)
(72) Inventor: AKIYAMA, Hiroshige, c/o Kakuda Development Center of Keihin Corporation, Kakuda-shi, Miyagi 981-1505 (JP); SHIMOKAWA, Junichi, c/o Kakuda Development Center Keihin Corporation, Kakuda-shi, Miyagi 981-1505 (JP); UEDA, Minoru, Wako-shi, Saitama 351-0193 (JP); HAYASHI, Akira, Wako-shi, Saitama 351-0193 (JP)
(74) Representative: Prechtel, Jörg
(86) International application number: PCT/JP2002/008675
(87) International publication number: WO 2003/021104

(56) References cited:
- EP-A- 1 384 874
- DE-A1- 2 422 519
- JP-A- 11 241 668
- JP-A- 11 270 394
- JP-U- 2 127 778
- JP-U- 60 157 947

## Description

The present invention relates to an improvement in a seal structure in a bypass intake control system in which a bypass extending around a throttle valve for opening and closing an intake passage in a throttle body is connected to the intake passage, and an actuator for operating a bypass valve for opening and closing the bypass is connected to the bypass valve, the actuator and the bypass being sealed from each other, so that the entering of a fuel or moisture into the actuator from the bypass is prevented.

### BACKGROUND ART

Such a seal structure in a bypass intake control system is already known, as disclosed in Japanese Patent Application Laid-open No.10-299624 and JP-11-270394, for example.

In the conventional seal structure in the bypass intake control system, an annular seal member is mounted at the border between an actuator housing in which the actuator is mounted and a valve bore in which the bypass valve is axially movably accommodated, so that a lip formed on an inner periphery of the seal member is in close contact with an outer peripheral surface of the bypass valve for relatively sliding movement in an axial direction. Therefore, the resistance to the axial sliding movement of the lip relative to the bypass valve is relatively large, resulting in a possibility that the responsiveness of the bypass valve may be detracted. Moreover, in order to isolate a clearance between an output shaft of the actuator and the bypass valve from the bypass, the bypass valve is formed into a bag shape to cover a tip end of the output shaft. Therefore, when the structure of the bypass valve is simplified in such a manner that the tip end of the output shaft of the actuator is exposed to the bypass, a separate seal member for sealing the output shaft and the bypass valve from each other is required, resulting in the entire seal structure complicated.

### DISCLOSURE OF THE INVENTION

The present invention has been accomplished with such circumstances in view, and it is an object of the present invention to provide a seal structure in a bypass intake control system, wherein the actuator and the bypass can be sealed reliably from each other by a single seal member, irrespective of the structure and the form of the bypass valve, and the frictional resistance at a sealed section can be minimized to contribute to even an enhancement in responsiveness of the bypass valve.

To achieve the above object, according to a first aspect and feature of the present invention, there is provided a seal structure in a bypass intake control system in which a bypass extending around a throttle valve for opening and closing an intake passage in a throttle body is connected to the intake passage, and an actuator for operating a bypass valve for opening and closing the bypass is connected to the bypass valve, characterized in that the bypass valve is connected to an output shaft of the actuator through a screw mechanism, and the seal structure includes an annular seal member which is disposed between a valve bore in which the bypass valve is received axially movably by the rotation of the output shaft and an actuator housing in which the actuator is mounted, so that the seal member is in close contact by an inner peripheral lip with an outer peripheral surface of a root of the output shaft of the actuator for rotation relative to each other, while maintaining the air-tightness between the valve bore and the actuator housing.

With the first feature, the actuator and the bypass can be sealed reliably from each other by the single seal member, irrespective of the structure of the bypass valve, thereby preventing the entrance of fuel and/or water drops from the bypass into the actuator. Moreover, the bypass valve is operated by the output shaft of the actuator through the screw mechanism, the annular seal member is provided between the valve bore in which the bypass valve is received and the actuator housing in which the actuator is mounted, for maintaining the air-tightness between the valve bore and the actuator housing, and the inner peripheral lip of the seal member is placed in close contact with the outer peripheral surface of the root of the output shaft of the actuator for rotation relative to each other. Therefore, the frictional resistance of the seal member on the rotational face of the output shaft of the actuator is extremely small and hence, an adverse influence on the responsiveness of the bypass valve can be avoided. Further, due to the disposition of the screw mechanism, even if the actuator is driven, the output shaft is only rotated at a fixed position, and there is neither possibility that the annular seal member might be moved axially to generate a difference in pressure between the valve bore and the actuator, nor influence in responsiveness. The sealing between the actuator and the bypass can be achieved irrespective of the structure of the bypass valve, leading to high general-purpose properties.

According to a second aspect and feature of the present invention, in addition to the first feature, a step is formed between the valve bore and the actuator housing, and an outer periphery of the seal member is clamped air-tightly between the step and the actuator.

With the second feature, the seal member is retained in a fixed position simultaneously with the mounting of the actuator in the actuator housing, leading to a good assemblability.

According to a third aspect and feature of the present invention, in addition to the second feature, the seal member is comprised of an annular reinforcing plate and an elastic sheath mold-coupled to an outer surface of the reinforcing plate, the elastic sheath being formed with an outer peripheral lip which is in close contact with at least one of clamping surfaces of the step and the actuator, and the inner peripheral lip.

With the third feature, the sealing attitudes of the outer peripheral lip and the inner peripheral lip can be maintained appropriately by the reinforcing plate, leading to enhanced sealing functions of these lips.

According to a fourth aspect and feature of the present invention, in addition to the third feature, the reinforcing plate is made of a synthetic resin and provided with an anchoring bore in which the elastic sheath is filled.

With the fourth feature, the weight of the seal member can be reduced by making the reinforcing plate from the synthetic resin, and the force of coupling of the reinforcing plate and the elastic sheath to each other can be increased effectively by filling the elastic sheath in the anchoring bore. Thus, it is possible to provide a seal member lightweight and high in durability.

The actuator corresponds to a step motor 39 in an embodiment of the present invention, which will be described hereinafter.

The above and other objects, features and advantages of the invention will become apparent from the following description of the preferred embodiment taken in conjunction with the accompanying drawings.

### BRIEF DESCRIPTION OF THE DRAWINGS

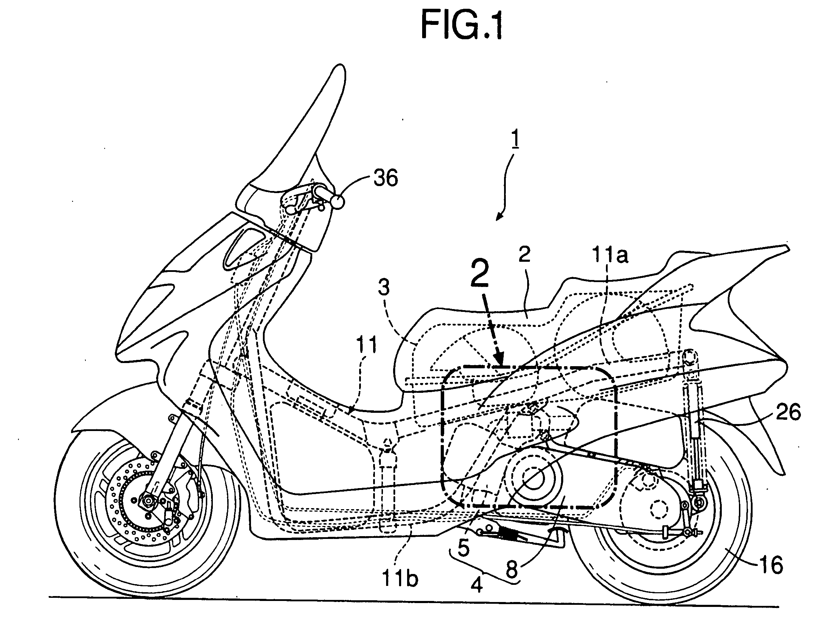

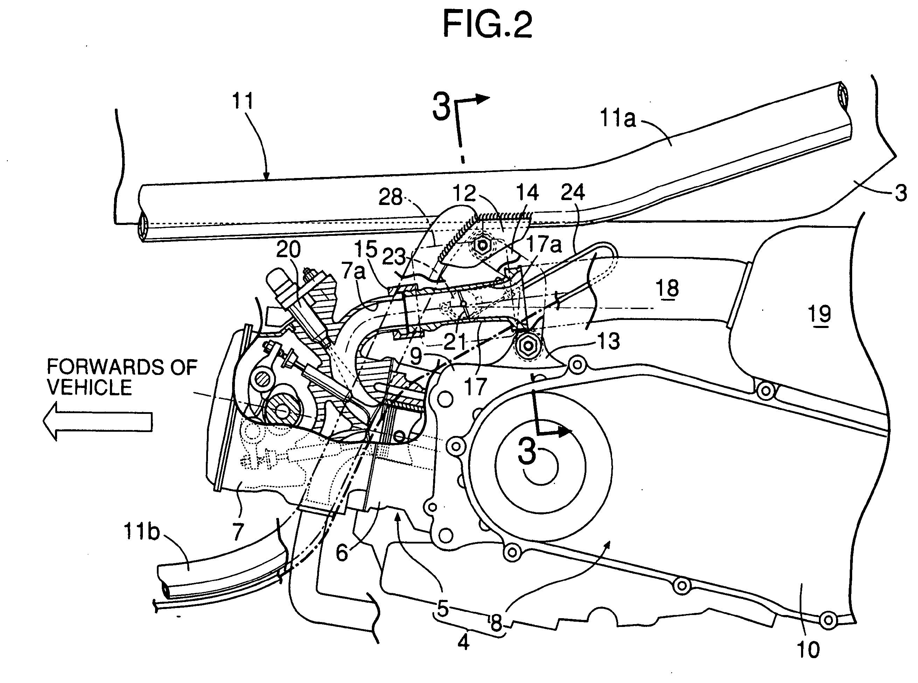

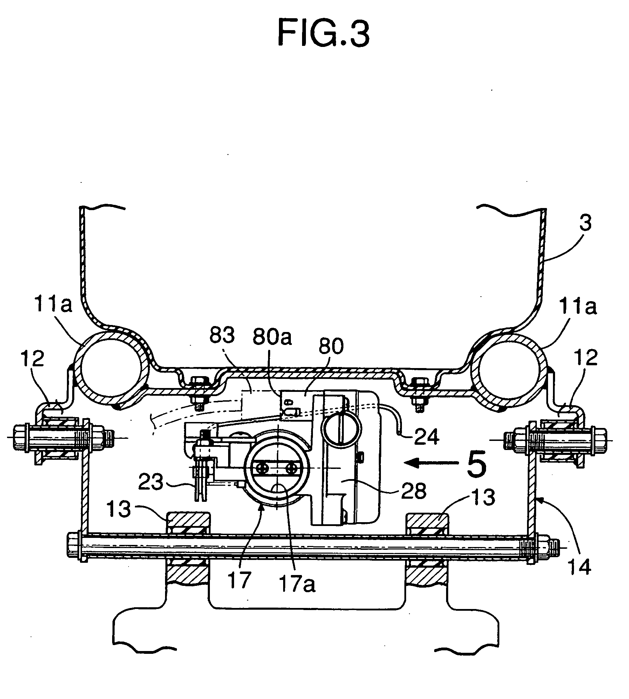

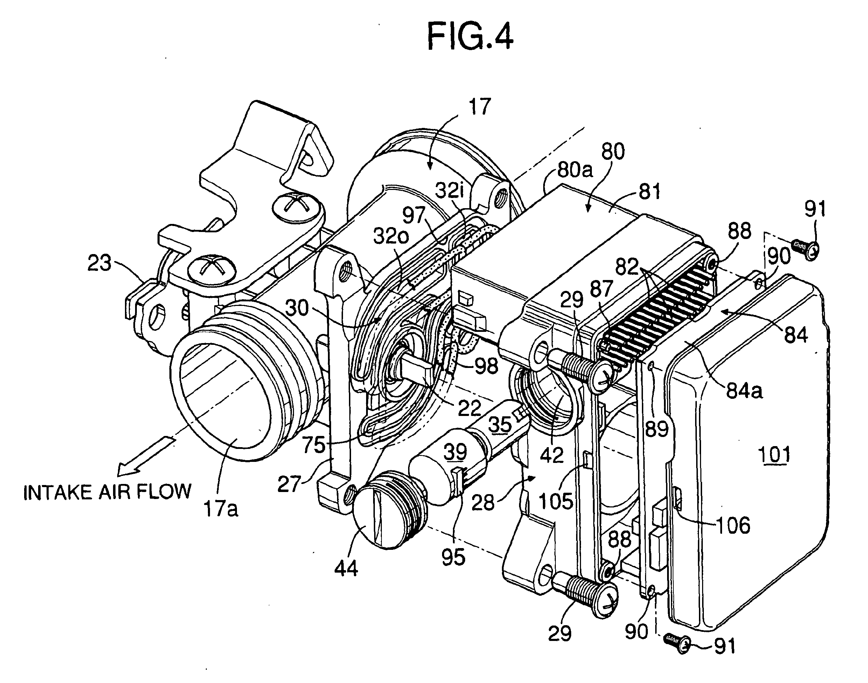

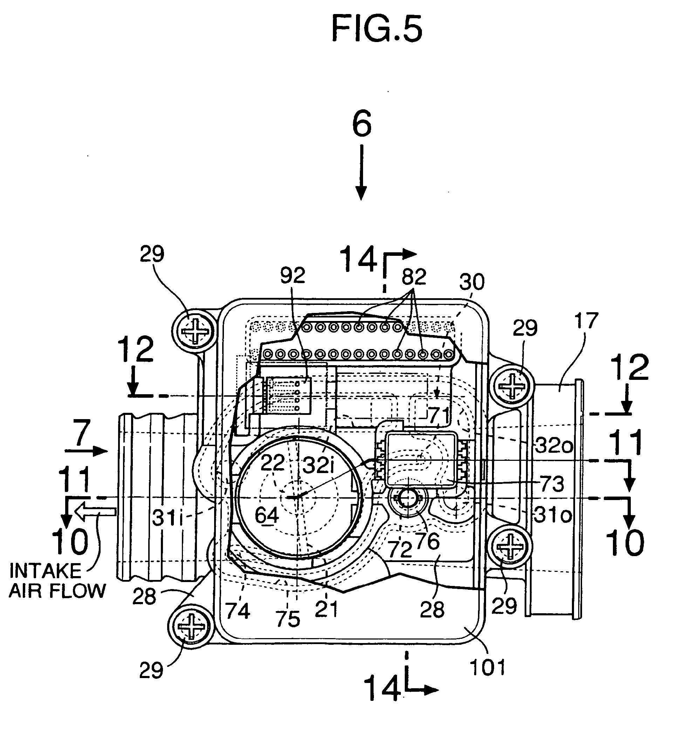

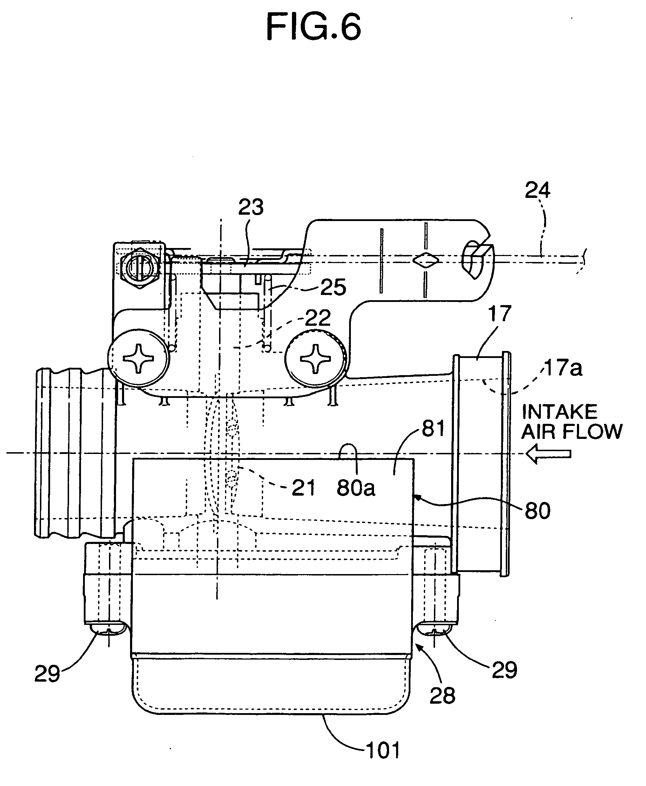

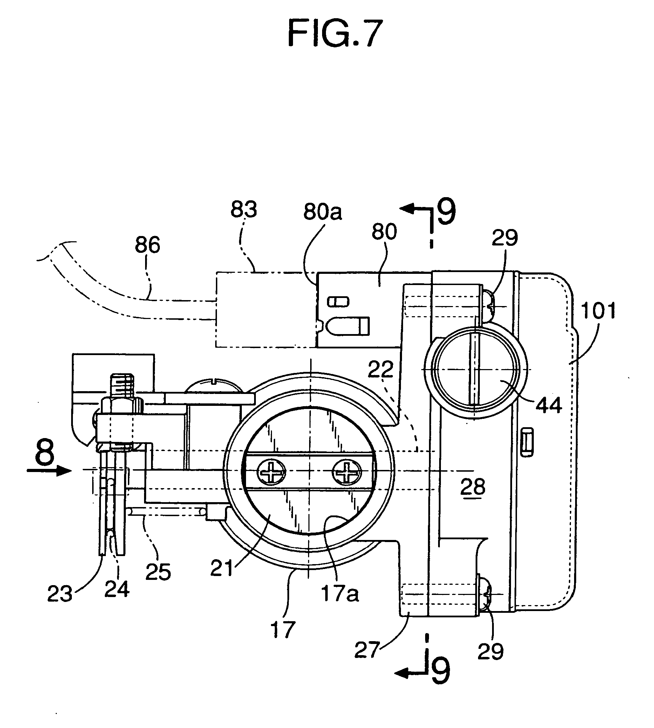

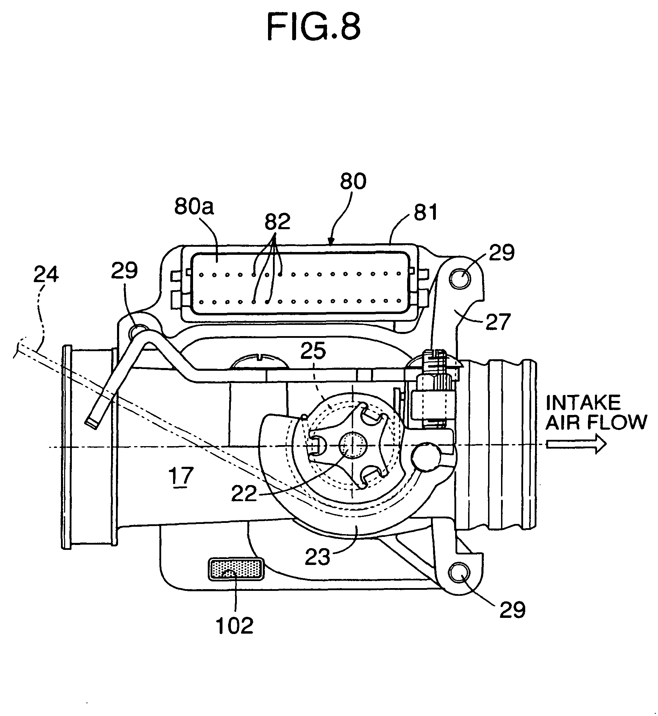

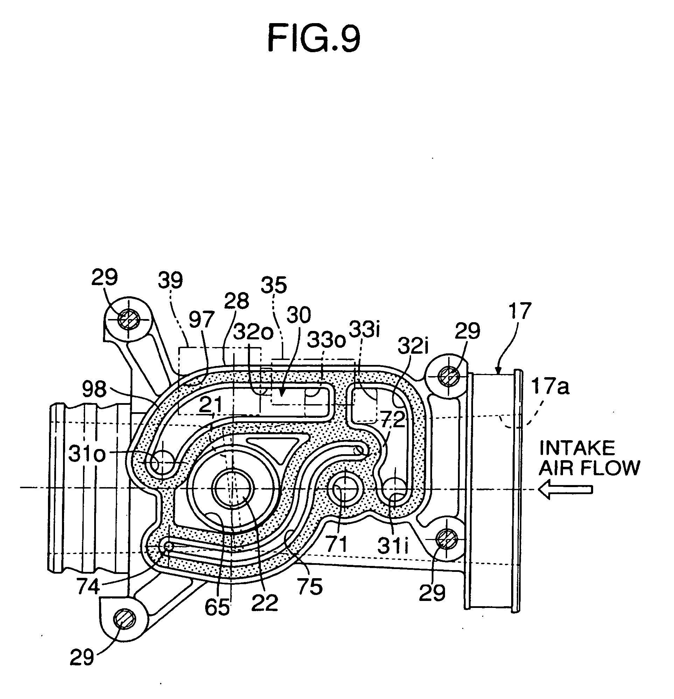

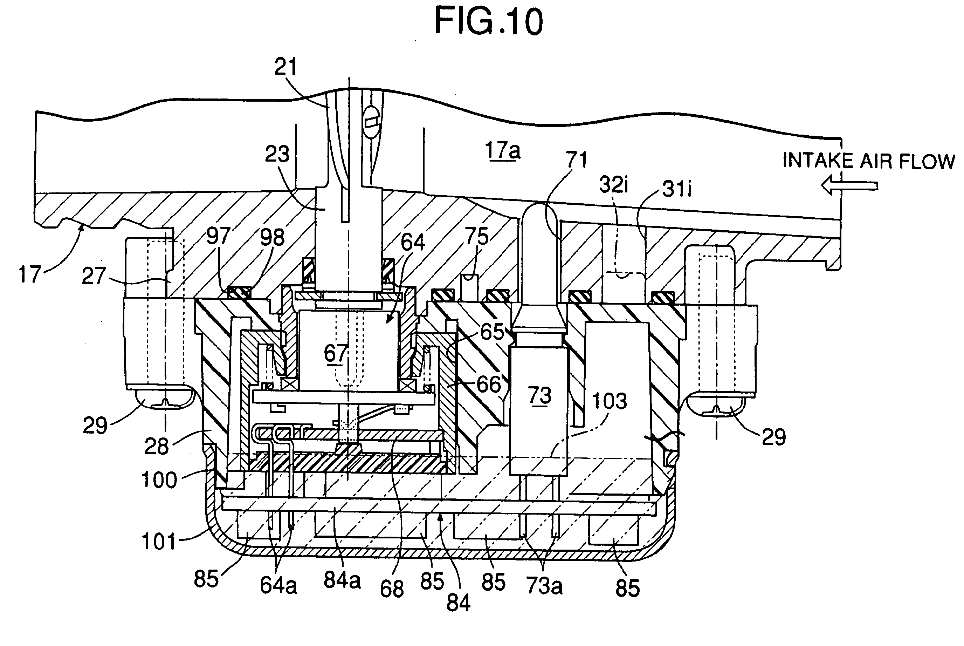

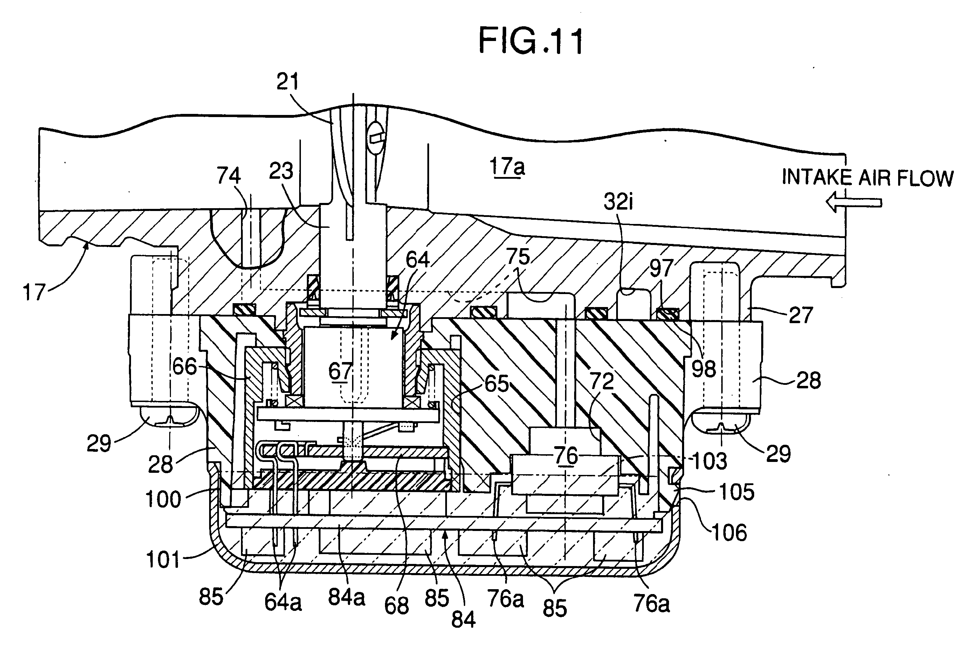

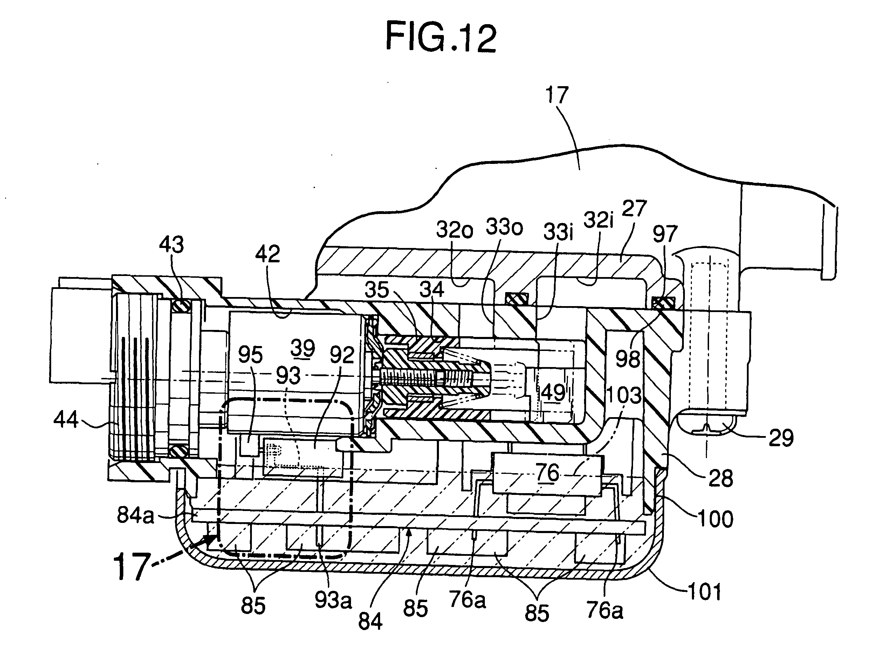

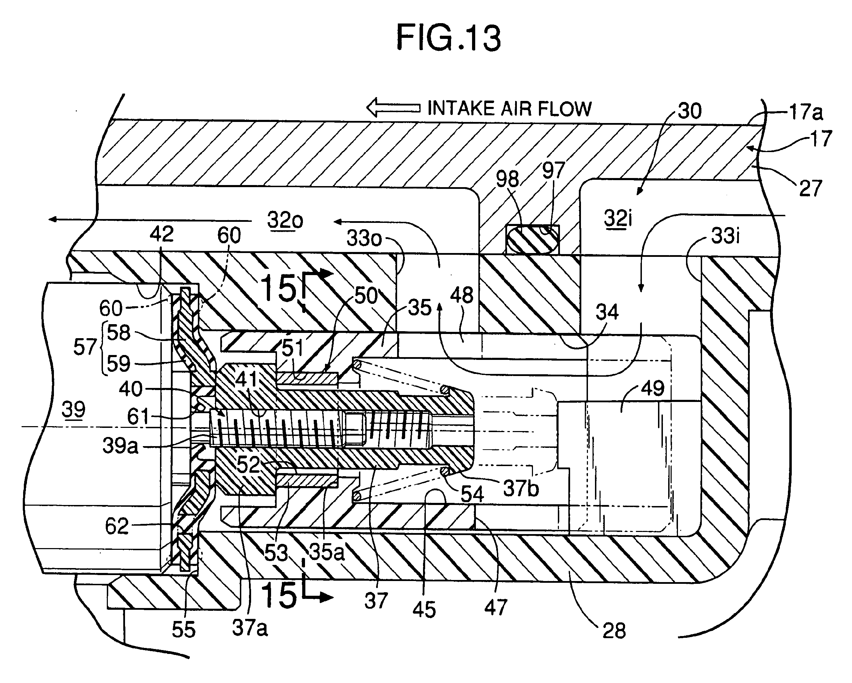

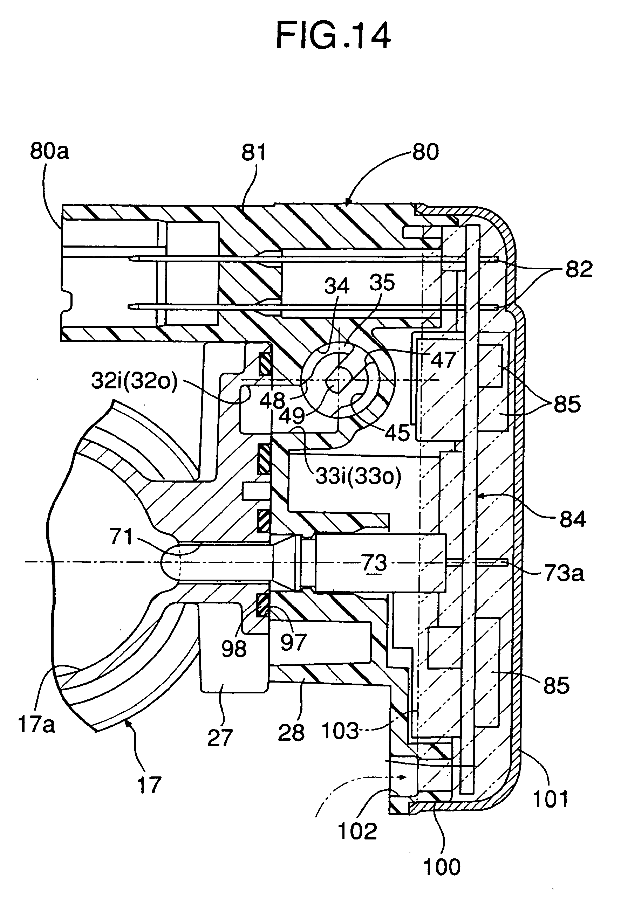

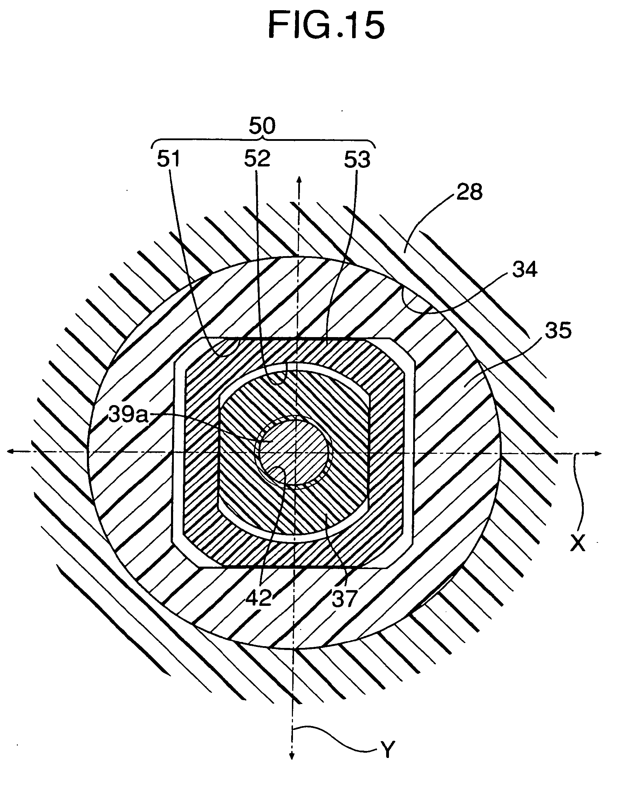

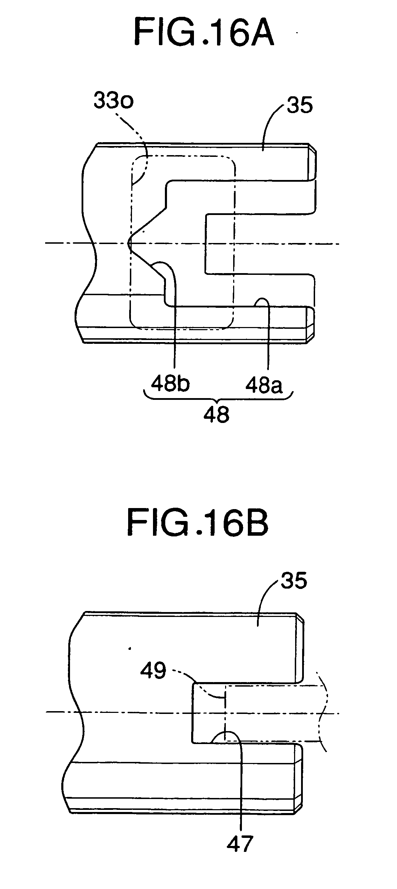

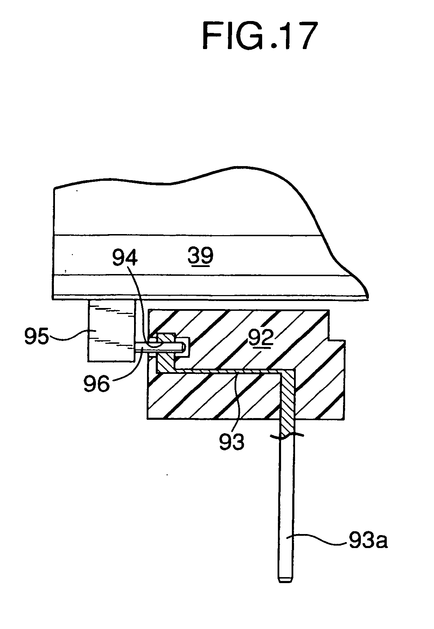

Fig.1 is a side view of a two-wheeled motor vehicle provided with an intake control system according to the present invention; Fig.2 is an enlarged sectional view of a section indicated by 2 in Fig.1; Fig.3 is a sectional view taken along a line 3-3 in Fig.2; Fig.4 is an exploded perspective view of the intake control system; Fig.5 is a side view of the intake control system; Fig.6 is a view taken in the direction of an arrow 6 in Fig.5; Fig.7 is a view taken in the direction of an arrow 7 in Fig.5; Fig.8 is a view taken in the direction of an arrow 8 in Fig.7; Fig.9 is a sectional view taken along a line 9-9 in Fig.7; Fig.10 is a sectional view taken along a line 10-10 in Fig.5; Fig.11 is a sectional view taken along a line 11-11 in Fig.5; Fig.12 is a sectional view taken along a line 12-12 in Fig.5; Fig.13 is an enlarged view of a section around the bypass valve in Fig.12; Fig. 14 is a sectional view taken along a line 14-14 in Fig.5; Fig.15 is an enlarged sectional view taken along a line 15-15 in Fig.13; Fig. 16A is a side view of the bypass valve taken from the side of a metering groove; Fig.16B is a side view of the bypass valve taken from the side of a key groove; and Fig. 17 is an enlarged sectional view of a section indicated by 17 in Fig. 12.

### BEST MODE FOR CARRYING OUT THE INVENTION

An embodiment of the present invention will now be described with reference to the accompanying drawings.

Referring first to Figs. 1 to 3, a two-wheeled motor vehicle 1 is formed into a scooter type in which a power unit 4 is disposed immediately below a luggage box 3 which is longer in a longitudinal direction and which is formed with a tandem seat 2 also serving as a lid therefore. The power unit 4 comprises an engine 5 having a cylinder block 6 largely inclined forwards, and a continuously variable transmission 8 having a transmission case 10 extending rearwards and integrally connected to one side of a crankcase 9 of the engine 5. A rear wheel 16 which is pivotally a driven wheel is supported at a rear end of the transmission case 10.

In a body frame 11 of the two-wheeled motor vehicle 1, upper brackets 12, 12 are provided at connections between a pair of left and right upper frame elements 11a, 11a supporting the luggage box 3 and upward-turned rear ends of a pair of left and right down-tubes 11b, 11b extended from a head pipe, and a pair of left and right lower brackets 13, 13 are formed on an upper surface of the crankcase 9 of the engine 5. The lower brackets 13, 13 are swingably carried at an intermediate portion of a crank-shaped engine hanger 14 swingably carried at its opposite ends on the upper brackets 12, 12. In this manner, the power unit 4 is vertically swingably supported on the body frame 11, and a reaction unit 26 for buffering the vertical swinging movement of the power unit 4 is mounted between the rear frame elements 11, 11 and the transmission case 10.

An intake port 7a is provided in a cylinder head 7 coupled to a front end of the cylinder block 6, so that its upstream end opens in a rearward direction of a vehicle body, and a throttle body 17 having an intake passage 17a leading to the intake port 7a is mounted to the cylinder head 7 with a connecting tube 15 interposed therebetween. In this case, the throttle body 17 is disposed between the luggage box 3 and the engine 5, so that the intake passage 17a extends longitudinally and substantially horizontally (slightly declined forwards in the illustrated embodiment). Therefore, the throttle body 17 is of a horizontal type. An air cleaner 19 is connected to a rear end of the throttle body 17 through an intake duct 18 passing above the engine hanger 14.

A fuel injection valve 20 for injecting fuel toward a downstream end of the intake port 7a is mounted in the cylinder head 7.

An intake control system according to the present invention and including the throttle body 17 will be described below in detail.

As shown in Figs. 4 to 8, a butterfly-type throttle valve 21 is disposed in the intake passage 17a in the throttle body 17 for opening and closing the intake passage 17a, and a valve shaft 22 supporting the throttle valve 21 is rotatably carried on left and right opposite sidewalls of the throttle body 17 to traverse the intake passage 17a horizontally. A throttle drum 23 is secured to one end of the valve shaft 22 protruding to one of sideways directions of the throttle body 17, and a single throttle cable 24 and a return spring 25 for biasing the throttle valve 21 in a closing direction are connected to the throttle drum 23, so that the throttle valve 21 is opened by pulling the throttle cable 24 by a throttle operating member (not shown).

A connecting flange 27 is integrally formed on the outer sidewall of the throttle body 17 from which the other end of the valve shaft 22 protrudes, so that such flange 27 extends perpendicular to the valve shaft 22 and in parallel to the intake passage 17a, and a control block 28 formed of a synthetic resin separately from the throttle body 17 is detachably coupled to the connecting flange 27 by a plurality of bolts 29. A bypass 30 is defined between the throttle body 17 and the control block 28 to extend around the throttle valve 21, so that it is connected to the intake passage 17a.

As clearly shown in Figs.4, 9 and 13, the bypass 30 is comprised of a bypass inlet 31i provided in the throttle body 17 to permit a portion of the intake passage 17a upstream of the throttle valve 21 to communicate with a joint surface of the connecting flange 27, a bypass outlet 31o provided in the throttle body 17 to permit a portion of the intake passage 17a downstream of the throttle valve 21 to communicate with the joint surface of the connecting flange 27, an upstream bypass groove 32i defined in the joint surface of the connecting flange 27 with one end thereof connected to the bypass inlet 31i, a downstream bypass groove 32o defined in the joint surface of the connecting flange 27 with one end thereof connected to the bypass outlet 31o, a valve bore inlet 33i defined in the control block 28 to lead to the other end of the upstream bypass groove 32i, a valve bore outlet 33o defined in the control block 28 to lead to the other end of the downstream bypass groove 32o, and a bottomed cylindrical valve bore 34 defined in the control block 28 in parallel to the intake passage 17a to permit the communication between the valve bore inlet 33i and the valve bore outlet 33o. In this case, the valve bore 34 is disposed above the bypass inlet 31i and the bypass outlet 31o, and the valve bore inlet 33i and the valve bore outlet 33o open into a lower surface of the valve bore 34.

Referring to Figs .12 and 13, a piston-shaped bypass valve 35 for controlling the degree of communication between the valve bore inlet 33i and the valve bore outlet 33o is slidably received in the valve bore 34, and a drive member 37 for driving the bypass valve 35 axially is connected to the valve 35 through an Oldham' s joint 50 for diametrically displacing movement relative to each other. An output shaft 39a of a step motor 39 is connected to the drive member 37 through a screw mechanism 40. More specifically, the output shaft 39a formed as a threaded shaft is threadedly fitted into a threaded bore 41 in the drive member 37, so that the drive member 37 can be advanced and retracted axially by the rotation of the output shaft 39a, thereby causing the bypass valve 35 to be likewise advanced and retracted through the Oldham's joint 50.

The step motor 39 is inserted into an actuator housing 42 mounted coaxially with the valve bore 34 to open into one side of the control block 28, and is retained by a plug 44 threadedly mounted in an opening of the actuator housing 42 with a seal member 43 interposed therebetween.

As clearly shown in Figs.16A and 16B, the bypass valve 35 is provided with a relatively deep cylindrical bottomed hollow 45 which opens toward a bottom of the valve bore 34, and a notch-shaped key groove 47 and a metering groove 48 permitting the communication between the inside and outside of the bottomed hollow 45. A key 49 rising from the bottom of the valve bore 34 is engaged into the key groove 47 to prevent the rotation of the bypass valve, while permitting the sliding movement of the bypass valve 35. The metering groove 48 is disposed in correspondence to the valve bore outlet 33o, and comprises a wider portion 48a extending axially of the bypass valve 35 with its groove width constant, and a tapered portion 48b leading to one end of the wider portion 48a with its groove width decreased more at a location farther from the wider portion 48a.

As shown in Figs.13 and 15, the Oldham's joint 50 is comprised of a first square bore 51 provided in the bypass valve 35 adjacent to the bottomed hollow 45, a joint member 53 fitted in the first square bore 51 for sliding movement in a first transverse direction X, and a second square bore 52 which is provided in the joint member 53 and into which the drive member 37 is fitted for sliding movement in a second transverse direction Y perpendicular to the first transverse direction X. The drive member 37 is formed at a relatively large length enough to extend through the joint member 53, and is provided at one end thereof with a larger flange 37a abutting against one end face of each of the joint member 53 and the bypass valve 35. The drive member 37 is provided at the other end thereof with a smaller flange 37b located in the bottomed hollow 45, and a retaining spring 54 for basing the bypass valve 35 toward the larger flange 37a is mounted under compression between the smaller flange 37b and the bypass valve 35. Therefore, the bypass valve 35 is clamped axially resiliently on the drive member 37 by the larger flange 37a and the retaining spring 54, and axially opposite surfaces of the valve 35 are communicated with each other through the first and second square bores 51 and 52 and through a sliding clearance between the valve 53 and the valve bore 34. The joint member 53 is clamped axially by a step 35a facing to the first square bore 51 in the bypass valve 35 and by the larger flange 37a of the drive member 37.

As can be seen from Figs.9, 13 and 14, the bypass valve 35 and the step motor 39 arranged in parallel to and coaxially with the intake passage 17a are disposed above the valve shaft 22 disposed horizontally on the throttle valve 21. Moreover, the bypass valve 35 is disposed to face to an upstream side of the intake passage 17a, and the step motor 17a is disposed to face to a downstream side of the intake passage 17a. As a result, the bypass downstream groove 32o is defined longer than the bypass upstream groove 32i.

The disposition of the valve bore 34 and thus the bypass valve 35 in parallel to the intake passage 17a leads to the compactness of the intake control system. In addition, the step motor 39 and the bypass valve 35 can be disposed with a good balance above the throttle valve shaft 22. This also contributes to the compactness of the intake control system.

Referring to Figs. 12 and 13, the actuator housing 42 has a diameter larger than that of the valve bore 34 coaxially arranged in front of the actuator housing 42 to form an annular step 55 at the border with the valve bore 34. A seal member 57 is clamped between the annular step 55 and a front end face of the step motor 39 mounted in the actuator housing 42. Namely, the seal member 57 is retained in a fixed position between the front end face and the annular step 55 simultaneously with the mounting of the step motor 39 in the actuator housing 42, leading to a good assemblability.

The seal member 57 comprises an annular reinforcing plate 58 made of a synthetic resin, and an elastic sheath 59 made of a rubber and mold-coupled to the reinforcing plate 58 to wrap the latter. A pair of front and rear side lips 60, 60 are formed on an outer periphery of the elastic sheath 59, and an inner peripheral lip 61 is formed on an inner peripheral surface of the elastic sheath 59. The side lips 60, 60 are in close contact with the annular step 55 and the front end face of the step motor 39, respectively, and the inner peripheral lip 61 is in close contact with an outer peripheral surface of a root of the output shaft 39a. The side lips 60, 60 and the inner peripheral lip 61 are retained appropriately in sealed attitudes by the reinforcing plate 58 and hence, always can exhibit a good sealing function.

A plurality of anchoring bores 62 are defined in the reinforcing plate 58, and the elastic sheath 59 is filled in the anchoring bores 62, whereby the force of coupling of the reinforcing plate 58 and the elastic sheath 59 to each other is increased. In addition, a reduction in weight of the seal member 57 is provided by the formation of the reinforcing plate 58 from the synthetic resin.

Referring to Figs. 5, 10 and 11, a throttle sensor 64 for detecting an opening degree of the throttle valve 21 is mounted in the control block 28. The throttle sensor 64 includes a case 66 fitted into a mounting recess 65 defined in the outer surface of the control block 28, a rotor 67 connected to an end of the valve shaft 22 of the throttle valve 21 in the case 66, and a stator 68 secured to the case 66 to detect an angle of rotation of the rotor 67 as the opening degree of the throttle valve 21.

As shown in Figs. 5, 9 and 14, a first sensor-mounting bore 71 is provided in the throttle body 17 and the control block 28 on one side of the mounting recess 65 in the throttle sensor 64, and opens into an upstream portion of the intake passage 17a, while extending perpendicularly to the connecting flange 27, and an intake temperature sensor 73 for detecting a temperature in the upstream portion of the intake passage 17a is mounted at a side of the control block 28 in the first sensor-mounting bore 71. A boost negative pressure detecting bore 74 is defined in the throttle body 17 to open into a downstream section of the intake passage 17a, and a second sensor-mounting bore 72 is defined in the control block 28 and located immediately above the first sensor-mounting bore 71. A communication passage 75 is defined in the joint surface of the connecting flange 27 as a bent groove extending around below the throttle sensor 64 to permit the communication between the boost negative pressure detecting bore 74 and the second sensor-mounting bore 72. A boost negative pressure sensor 76 for detecting an intake negative pressure in the downstream section of the intake passage 17a, i.e., a boost negative pressure in the engine 5, through the boost negative pressure detecting bore 74 is mounted in the second sensor-mounting bore 72. In this manner, the intake temperature sensor 73 and the boost negative pressure sensor 76 are disposed in proximity to each other.

The bypass inlet 31i which is an upstream end of the bypass 30 is disposed at a location upstream of the first sensor-mounting bore 71 in the intake passage 17a and in proximity to the first sensor-mounting bore 71. The communication passage 75 is disposed to extend around below the throttle sensor 64, while the bypass downstream groove 32o is disposed to extend around above the throttle sensor 64.

Referring to Figs. 4 to 8 and 14, a vertically flattened coupler 80 is mounted at an upper portion of the control block 28. The coupler 80 comprises a coupler body 81 integrally formed on the control block 28, and a large number of connectors 82 embedded in the coupler body 81. The coupler body 81 extends beyond the connecting flange 27 to immediately above the throttle body 17 with a coupler opening 80a turned in a direction opposite from the control block 28. An external coupler 83 having a wire harness 86 connected thereto and leading to a power source or the like is coupled in the coupler opening 80a.

The control block 28 having such coupler 80 is of a box type with an outer end face opposite from the connecting flange 27 being opened, and a base board 84a of an electronic control unit 84 is placed on such outer end face. In this case, connected directly to the base board 84a by soldering are the intake temperature sensor 73, the boost negative pressure sensor 76 and a connecting terminal 64a of the throttle sensor 64 as well as inner ends of the connectors 82 of the coupler 80 (see Figs. 10 to 12). Reference character 85 designates each of various semiconductor elements mounted on the base board 84a. Thus, even if a foreign matter such as fuel drops enters into the boost negative detecting bore 74 through the intake passage 17a in the throttle body 17 of the horizontal type due to an intake air blow-back phenomenon in the engine 5, the foreign matter cannot rise up to the boost negative pressure sensor 76, because a large throw is provided between the boost negative detecting bore 74 and the boost negative pressure sensor 76 located above the bore 74 by the communication passage 75 and moreover, the communication passage 75 is the bent passage having a large flow path resistance. Therefore, it is possible to protect the boost negative pressure sensor 76 from the foreign matter to ensure the function and durability of the boost negative pressure sensor 76.

In addition, since the intake temperature sensor 73 and the boost negative pressure sensor 76 are disposed concentratedly on one side of the throttle sensor 64, they can be connected concentratedly to the electronic control unit 84, leading to the compactness of the unit 84.

Further, the groove as the communication passage 75 as well as the bypass upstream and downstream grooves 32i and 32o as main portions of the bypass 30 are defined in the joint surface of the connecting flange 27 of the throttle body 17 and hence, they can be formed simultaneously with the formation of the throttle body 17. Thus, a special processing for forming them is not required, thereby providing an enhancement in productivity.

Furthermore, since the bypass inlet 31i is disposed in proximity to the first sensor-mounting bore 71 located below the second sensor-mounting bore 72 at the location upstream of the first sensor-mounting bore 71 in the intake passage 17a, the first and second sensor-mounting bores 71 and 72 and the bypass inlet 31i can be disposed concentratedly without interference with one another, which can contribute to the compactness of the control block 28.

Yet further, since the bypass downstream groove 32o and the communication bore 75 are disposed to surround the throttle sensor 64 from above and below, they can be disposed compactly around the throttle sensor 64 without interference with each other, which can contribute to the further compactness of the control block 28.

Referring again to Fig. 4, positioning projections 87 are formed at a pair of corners on one of diagonal lines on an outer end face of the control block 28 having the coupler 80, and threaded bores 88 are defined in corners on the other diagonal line. On the other hand, positioning bores 89 corresponding to the positioning projections 87 and machine screw bores 90 corresponding to the threaded bores 88 are provided in the base board 84a, so that the base board 84a is secured in a predetermined position on the control block 28 by fitting the positioning bores 89 into the positioning projections 87 and threadedly inserting machine screws 91 which are inserted through the machine screw bores 90 into the threaded bores 88.

In the control block 28, a substantially rectangular parallelepiped connector piece 92 made of a synthetic resin is positioned and fixed between the step motor 39 and the base board 84a, as shown in Figs.12 and 17. A plurality of lead frames 93 are embedded in the connector piece 92. A connecting terminal 93a formed at one end of each of the lead frames 93 is connected directly to the base board 84a by soldering, and a connector bore 94 is defined in the other end of each of the lead frames 93.

On the other hand, a plurality of connector pins 96 protrude from a front end face of a terminal draw-out portion 95 projectingly provided on the outer surface of the step motor 39 (from a front end face in a direction of insertion of the step motor 39 into the actuator housing 42). The connector pins 96 are fitted into the connector bores 94 simultaneously with the insertion of the step motor 39 into the actuator housing 42.

The electronic control unit 84 controls the operations of not only the step motor 39 and the fuel injection valve 20 but also an ignition device (not shown) and the like, based on signal output from an engine rotational speed sensor, an engine temperature sensor (both not shown)and the like, in addition to the throttle sensor 64, the boost negative pressure sensor 76 and the intake temperature sensor 73, and the delivery of the signals and an electric power is carried out through the coupler 80 and the external coupler 83 coupled to the coupler 80.

As shown in Figs.4 and 9, a seal groove 97 is defined in the joint surface of the connecting flange 27 to surround peripheries of the bypass upstream groove 32i, the bypass downstream groove 32o, the first sensor-mounting bore 71, the boost negative pressure detecting bore 74 and the communication passage 75. A seal member 98 is mounted in the seal groove 97 to come into close contact with the control block 28, whereby the bypass upstream groove 32i, the bypass downstream groove 32o and the like are maintained air-tightly.

As shown in Figs. 4, 11 and 12, a cap 101 made of an aluminum alloy plate for accommodating the electronic control unit 84 is socket-coupled to stepped fitting faces 100 formed on an outer periphery of the outer end of the control block 28 having the coupler 80. In this case, a locking projection 105 and a locking bore 106 (see Figs.4 and 11) formed on the fitting faces are resiliently engaged in each other. The cap 101 is formed by subjecting the aluminum alloy plate to a pressing treatment and is provided with a good appearance free from wrinkles. Therefore, the cap 101 provides a good appearance to the control block 28 and is effective when the control block 28 is exposed to the outside, as in the two-wheeled motor vehicle 1.

A potting port 102 (see Figs. 8 and 14) is provided in the control block 28 adjacent to an open end face of the cap 101 to communicate with the inside of the cap 101 and to open into a side of the control block 28 opposite from the cap 101. A synthetic resin 103 is potted from the potting port 102 into a cap 101 turned downwards to a socket-coupled portion of the cap 101, whereby the electronic control unit 84 is wrapped, and the socket-coupled portion of the cap 101 is sealed.

The potted resin 103 protects the electronic control unit 84 from rainwater and a dust and from the vibration. Particularly, the water-proofing and the dust-proofing can be achieved effectively by sealing the socket-coupled portion of the cap 101 to the control block 28. Further, the force of coupling of the cap 101 and the control block 28 to each other can be increased by an adhesive force of the potted resin 103.

Moreover, the electronic control unit 84 is accommodated in the cap 101; the cap 101 is turned downwards, and the synthetic resin 103 is potted from the potting port 102 turned to an upper position as a result of the downward turning of the cap 101. Therefore, the protection of the electronic control unit 84 and the coupling of the cap 101 can be achieved efficiently with a required minimum amount of the potted resin 103 and hence, it is possible to prevent the entrance of the synthetic resin 103 into the bypass valve 35 and the step motor 39 above the cap 101.

In the potting, the amount of synthetic resin potted can be regulated easily, while visually observing the state of potting of the synthetic resin into the cap 101 through the potting port 102. In addition, the potted resin 103 also wraps connections of connecting terminals 64a, 73a, 76a of the sensors 64, 73, 76 and connecting terminal 93a of the connector piece 92 to the base board 84a and hence, the vibration resistances of the connecting terminals 64a, 73a, 76a and 93a can be enhanced.

Referring again to Figs.3 and 7, the control block 27 including the various sensors 64, 73 and 76 and the electronic control unit 84 is disposed on one of the left and right of the throttle body 17, while the coupler 80 is disposed above the throttle body 17, i.e., between the throttle body 17 and the bottom wall of the luggage box 3. With such dispositions of the various sensors 64, 73 and 76 and the electronic control unit 84 and the coupler 80 in a dispersed manner, they can be disposed easily even in a narrow space around the throttle body 17 in the two-wheeled motor vehicle 1. Particularly, the coupler 80 can be vertically flattened and hence, even if it is disposed above the throttle body 17, the bottom of the luggage box 3 above the coupler 80 may be little moved upwards, and the volume of the luggage box 3 can be increased.

Moreover, the coupler port 80a of the coupler 80 for coupling of the external coupler 83 is turned to the side opposite from the electronic control unit 84 and hence, the connection of the external coupler 83 to the coupler 80 can be conducted easily without being obstructed by the electronic control unit 84 and the engine 5, leading to a good assemblability and a good maintenance.

The throttle drum 23 is secured to one end of the valve shaft 22 extending in the lateral direction, which is opposite from the electronic control unit 84, and the throttle cable 24 connected to the throttle drum 23 is disposed to pass through below the coupler port 80a in the coupler 80 (see Fig. 8). This makes it possible to avoid the interference of the throttle cable 24 and the wire harness 86 of the external coupler 83 coupled to the coupler 80 with each other, leading to enhancements in assemblability and maintenance.

Further, as shown in Figs. 2, 3, 7 and 8, the throttle cable 24 connected to the throttle drum 23 once extends rearwards through a lower portion of the throttle drum 23; is bent in a U-shape within a crank section of the engine hanger 14; then extends forwards along the down-tube 11b on one side of the body frame 11; and is connected to the throttle operating member (not shown) mounted on a steering handlebar 36 (Fig.1).

Thus, when the power unit 4 is moved upwards or downwards in response to expansion or contraction of the reaction unit 26 during steering of the two-wheeled motor vehicle 1, the throttle body 17 is also swung along with the power unit 4. However, mainly the U-shaped bent portion of the throttle cable 24 is flexed without effort in response to such swinging, whereby an excessive stress can be prevented from being generated in the throttle cable 24 and hence, the durability of the throttle cable can be ensured. Moreover, notwithstanding that the throttle drum 23 and the coupler port 80a in the coupler 80 are disposed on the same side as the throttle body 17, a relatively large working space which is not obstructed by the throttle cable 24 can be ensured around the coupler port 80a in the coupler 80 by arranging the single throttle cable 24 in the above-described manner, thereby facilitating the connection of the external coupler 83 to the coupler port 80a.

The operation of the intake control system will be described below.

When the throttle valve 21 is in a fully opened state, the electronic control unit 84 determines operational conditions for the engine such as those during starting of the engine, during a first idling of the engine, during a usual idling of the engine, and during application of an engine brake, based on signals output from the throttle sensor 64, the intake temperature sensor 73, the boost negative pressure sensor 76 and the like, and operates the step motor 39 to rotate or reverse the output shaft 39a in order to provide an opening degree of the bypass valve 35 corresponding to the operational conditions determined.

When the output shaft 39a is rotated or reversed, the drive member 37 is advanced or retracted axially, whereby the bypass valve 35 is slid forwards or backwards along the valve bore 34 through the joint member 53 to increase or decrease the area of the metering groove 48 opened into the valve bore outlet 33o, i.e., the opening degree of the bypass 30, thereby controlling the flow rate of intake air in the bypass 30. Particularly, the flow rate of the intake air can be controlled finely in a range of from zero to a predetermined maximum value by the tapered portion 48b of the metering groove 48 being advanced and retracted relative to the valve bore outlet 33o. As a result, the starting, the first idling and the usual idling of the engine can be conducted automatically and appropriately.

In this case, even if the Oldham's joint 50 causes a misalignment between axes of the bypass valve 35 and the output shaft 39a of the step motor 39 due to a manufacture error, such misalignment is absorbed into the movement of the joint member 53 in the first transverse direction X and the movement of the drive member 37 in the second transverse direction Y. Therefore, the smooth sliding movement of the bypass valve 35 can be guaranteed irrespective of such misalignment and at the same time, the vibration of the bypass valve 35 can be suppressed by the retaining spring 54.

In the fully closed state of the bypass valve 35, an intake negative pressure in the engine 5 is applied to a side of the bypass valve 35 facing to the valve bore outlet 33o. At that time, however, the Oldham's joint 50 permits the parallel movement of the bypass valve 35 in a direction of application of such intake negative pressure and hence, the bypass valve 35 can be brought reliably into close contact with the periphery of the valve bore outlet 33o to prevent or minimize the leakage of the intake air in the bypass from the valve bore outlet 33o. Therefore, a specially high dimensional accuracy is not required in the valve bore 34 and the bypass valve 35, which can contribute to an enhancement in productivity.

Further, the axially opposite ends of the bypass valve 35 communicate with each other through the first and second square bores 51 and 52 in the Oldham's joint 50 and the sliding clearance between the valve 35 and the valve bore 34 and hence, even if any pressure is transmitted to the valve bore 34, a difference in pressure is not generated between the axially opposite ends of the bypass valve 35 and therefore, the bypass valve 35 can be operated lightly even by a relatively small output from the step motor 39. This means that a reduction in output from the step motor 39 and further, a reduction in size of the step motor 39 can be realized, while enhancing the responsiveness of the bypass valve 35.

Yet further, the bypass valve 35 is biased in the direction from the valve bore inlet 33i to the valve bore outlet 33o by the retaining spring 54, and the biasing force is supported by the larger flange 37a of the drive member 37 in which the output shaft 39a of the step motor 39 is threadedly fitted directly. Therefore, particularly, when the output shaft 39a is rotated in a direction to close the bypass valve 35, the drive member 37 pushes the bypass valve 35 in the closing direction directly by the larger flange 37a thereof and hence, the closing speed of the bypass valve 35 can be increased irrespective of the presence of the retaining spring 54.

On the other hand, if the throttle valve 21 is opened, an amount of intake air depending on an increase in opening degree of the throttle valve 21 is supplied to the engine 5 through the intake passage 17a and thus, the output from the engine 5 can be controlled.

It should be noted here that in such intake control system, the control block 28 having the coupler 80 and separate from the connecting flange 27 is coupled to the connecting flange 27 of the throttle body 17, and the bypass valve 35, the step motor 39, the intake temperature sensor 73, the boost negative pressure sensor 76, the throttle sensor 64 and the electronic control unit 84 are mounted to the control block 28. Therefore, the processing or working of the throttle body 17 and the fabrication of a control assembly including the control block 28 can be carried out in parallel to each other. Particularly, the functions of the step motor 39, the bypass valve 35, the various sensors 64, 73 and 76, the electronic control unit 84 and the like can be inspected by properly connecting a power source or the like to the coupler 80 before coupling of the control block 28 to the throttle body 17. Therefore, only the components passing the inspection are mounted to the throttle body 17 and hence, there is no waste in the assembling operation, thereby enabling an enhancement in productivity.

Moreover, the electronic control unit 84 is placed on the outer end face of the control block 28, and the step motor 39, the various sensors 64, 73 and 76 and the coupler 80 are electrically connected to one another through the electronic control unit 84. Therefore, the connection of the step motor 39, the various sensors 64, 73 and 76 and the coupler 80 by wires can be simplified, leading to a further enhancement in assemblability.

Further, the step motor 39 is provided with the connector pins 96 protruding in the direction of insertion of the step motor 39 into the actuator housing 42, and the connector bores 94 for fitting of the connector pins 96 are provided in the lead frames 93 leading to the coupler 80 on the control block 28. Therefore, the step motor 39 and the coupler 80 are electrically connected to each other simultaneously with the mounting of the step motor 39 to the control block 28 and thus, a special electrically connecting operation is not required, thereby enabling a further enhancement in assemblability.

Additionally, the lead frames 93 having the connector bores 94 are embedded in the connector piece 92 which is a smaller part positioned and fixed to the control block 28 between the step motor 39 and the electronic control unit 84. Therefore, the embedding is extremely easy and accurate, as compared with a case where they are embedded in the control block 28 which is a larger part. In addition, the connector bores 94 in the lead frames 93 can be disposed accurately in the fixed position by setting the connector piece 92 in the control block 28, and the proper fitting of the connector bores 94 and the connector pins 96 of the step motor 39 is guaranteed.

Further, the actuator housing 42 for mounting of the step motor 39 therein is mounted to open into the outer peripheral surface of the control block 28, which is different from the outer end face of the control block 28 on which the electronic control unit 84 is placed. Therefore, it is possible to form the control block 28 compactly, and to mount and remove the step motor 39 irrespective of the placement of the electronic control unit 84, thereby conducting the maintenance of the step motor 39 and the bypass valve 35 easily.

When the operation of the engine 5 is at stoppage, moisture in the air within the valve bore 34 may be condensed on an inner wall of the valve bore 34 in some cases, but water drops resulting from the condensation are inhibited by the seal member 57 disposed between the valve bore 34 and the actuator housing 42 from entering into the step motor 39 and hence, the step motor 39 can be protected, leading to an enhancement in durability thereof.

Especially, the seal member 57 is clamped between the step motor 39 and the annular step 55 formed between the valve bore 34 and the actuator housing 42, and has the inner peripheral lip 61 provided in its inner peripheral surface to come into close contact with the outer peripheral surface of the root of the output shaft 39a of the step motor 39. Therefore, the frictional resistance of the inner peripheral lip 61 on the rotational face of the output shaft 39a is extremely small, and an influence to the responsiveness of the bypass valve 35 can be eliminated. Moreover, even in the case of the bypass valve 35 of such a type in which a tip end of the output shaft 39a is exposed to the inside of the valve bore 34, the step motor 39 and the valve bore 34 can be sealed reliably from each other by the single seal member 57. Namely, the structure of the bypass valve 35 is not limited and hence, the seal member 57 is applicable in a wider range.

In addition, when the operation of the engine 5 is at stoppage, in usual, the bypass valve 35 brings the valve bore outlet 33o into a fully closed state and hence, even if a fuel gas generated in the downstream section of the intake passage 17a enters into a downstream section of the bypass 30, the entrance of the fuel gas into the valve bore 34 is inhibited by the bypass valve 35. Therefore, even if the sealing function of the seal member 57 should be detracted, the step motor 39 can be prevented from being exposed to the fuel gas and thus, the durability of the step motor 39 can be ensured.

Further, the length of a section of the bypass 30 downstream from the valve bore 34 is set at a sufficiently large value and hence, the fuel gas generated in the downstream section of the intake passage 17a is difficult to pass through the sufficiently long downstream section of the bypass. Therefore, it is possible to prevent the entrance of the fuel gas into the valve bore 34 to further contribute to the protection of the step motor 39.

Additionally, since the valve bore inlet 33i and the valve bore outlet 33o occupying positions higher in level than the bypass inlet 31i and the bypass outlet 31o in the bypass 30 open into the lower surface of the valve bore 34, a foreign matter such as a dust and the like is hard to enter into the valve bore 34 from the valve inlet 33i and the valve bore outlet 33o and hence, it is possible to avoid the failure of the operation of bypass valve 35 due to the entering foreign matter.

## Claims

1. A seal structure in a bypass intake control system in which a bypass (30) extending around a throttle valve (21) for opening and closing an intake passage (17a) in a throttle body (17) is connected to said intake passage (17a), and an actuator (39) for operating a bypass valve (35) for opening and closing said bypass (30) is connected to said bypass valve (35),
**characterized in that** said bypass valve (35) is connected to an output shaft (39a) of said actuator (39) through a screw mechanism (40), and said seal structure includes an annular seal member (57) which is disposed between a valve bore (34) in which said bypass valve (35) is received axially movably by the rotation of said output shaft (39a) and an actuator housing (42) in which said actuator (39) is mounted, so that said seal member (57) is in close contact by an inner peripheral lip (61) with an outer peripheral surface of a root of said output shaft (39a) of said actuator (39) for rotation relative to each other, while maintaining the air-tightness between said valve bore (34) and said actuator housing (42).

2. A seal structure in a bypass intake control system according to claim 1, wherein
a step (55) is formed between said valve bore (34) and
said actuator housing (42), and an outer periphery of said seal member (57) is clamped air-tightly between said step (55) and said actuator (39).

3. A seal structure in a bypass intake control system according to claim 2, wherein
said seal member (57) is comprised of an annular reinforcing plate (58) and an elastic sheath (59) mold-coupled to an outer surface of said reinforcing plate (58), said elastic sheath (59) being formed with an outer peripheral lip (60) which is in close contact with at least one of clamping surfaces of said step (55) and said actuator (39), and said inner peripheral lip (61).

4. A seal structure in a bypass intake control system according to claim 3, wherein
said reinforcing plate (58) is made of a synthetic resin and provided with an anchoring bore (62) in which said elastic sheath (59) is filled.

## Patentansprüche

1. Dichtungsstruktur in einem Bypasseinlass-Steuersystem, in dem ein Bypass (30), der sich um ein Drosselventil (21) zum Öffnen und Schließen eines Einlasskanals (17a) in einem Drosselkörper (17) herum erstreckt, mit dem Einlasskanal (17a) verbunden ist, und ein Aktuator (39) zum Betätigen eines Bypassventils (35) zum Öffnen und Schließen des Bypasses (30) mit dem Bypassventil (35) verbunden ist, **dadurch gekennzeichnet, dass** das Bypassventil (35) mit einer Ausgangswelle (39a) des Aktuators (39) durch einen Schraubmechanismus (40) verbunden ist und die Dichtungsstruktur ein ringförmiges Dichtungselement (57) enthält, das zwischen einer Ventilbohrung (34), in der das Bypassventil (35) durch Drehung der Ausgangswelle (39a) axial beweglich aufgenommen ist, und einem Aktuatorgehäuse (42), in dem der Aktuator (39) angebracht ist, angeordnet ist, so dass das Dichtungselement (57) durch eine Innenumfangslippe (61) mit einer Außenumfangsfläche eines Fußes der Ausgangswelle (39a) des Aktuators (39) relativ zueinander drehbar in engem Kontakt steht, während die Luftdichtigkeit zwischen der Ventilbohrung (34) und dem Aktuatorgehäuse (42) erhalten bleibt.

2. Dichtungsstruktur in einem Bypasseinlass-Steuersystem nach Anspruch 1, worin
eine Stufe (55) zwischen der Ventilbohrung (34) und dem Aktuatorgehäuse (42) gebildet ist, und ein Außenumfang des Dichtungselements (57) zwischen der Stufe (55) und dem Aktuator (39) luftdicht eingeklemmt ist.

3. Dichtungsstruktur in einem Bypasseinlass-Steuersystem nach Anspruch 2, worin
das Dichtungselement (57) aus einer ringförmigen Verstärkungsplatte (58) und einer auf eine Außenfläche der Verstärkungsplatte 58 aufgeformten elastischen Schicht (59) aufgebaut ist, wobei die elastische Schicht (59) mit einer Außenumfangslippe (60), die mit zumindest einer von Klemmflächen der Stufe (55) und des Aktuators (39) in engem Kontakt steht, und der Innenumfangslippe (61) ausgebildet ist.

4. Dichtungsstruktur in einem Bypasseinlass-Steuersystem nach Anspruch 3, worin
die Verstärkungsplatte (58) aus Kunstharz hergestellt ist und mit einer Verankerungsbohrung (62) versehen ist, in die die elastische Schicht (59) gefüllt ist.

## Revendications

1. Structure de joint d'étanchéité dans un système de régulation d'admission de dérivation dans laquelle une dérivation (30) s'étendant autour d'un papillon des gaz (21) pour ouvrir et fermer un passage d'admission (17a) dans un corps d'étrangleur (17) est raccordée audit passage d'admission (17a), et un actionneur (39) pour actionner une soupape de dérivation (35) pour ouvrir et fermer ladite dérivation (30) est raccordé à ladite soupape de dérivation (35),
**caractérisée en ce que** ladite soupape de dérivation (35) est raccordée à un arbre de sortie (39a) dudit actionneur (39) par le biais d'un mécanisme de vis (40), et ladite structure de joint d'étanchéité comprend un élément de joint d'étanchéité annulaire (57) qui est disposé entre un alésage de soupape (34) dans lequel ladite soupape de dérivation (35) est reçue de manière axialement mobile par la rotation dudit arbre de sortie (39a) et un boîtier d'actionneur (42) dans lequel ledit actionneur (39) est monté, de sorte que ledit élément de joint d'étanchéité (57) est en contact étroit grâce à une lèvre périphérique interne (61) avec une surface périphérique externe d'une emplanture dudit arbre de sortie (39a) dudit actionneur (39) pour la rotation l'un par rapport à l'autre, tout en maintenant l'étanchéité à l'air entre ledit alésage de soupape (34) et ledit boîtier d'actionneur (42).

2. Structure de joint d'étanchéité dans un système de régulation d'admission de dérivation selon la
revendication 1, dans laquelle un échelon (55) est formé entre ledit alésage de soupape (34) et ledit boîtier d'actionneur (42), et une périphérie externe dudit élément de joint d'étanchéité (57) est serrée de manière étanche à l'air entre ledit échelon (55) et ledit actionneur (39).

3. Structure de joint d'étanchéité dans un système de régulation d'admission de dérivation selon la revendication 2, dans laquelle ledit élément de joint d'étanchéité (57) est composé d'une plaque de renforcement annulaire (58) et d'une gaine élastique (59) couplée par moulage à une surface externe de ladite plaque de renforcement (58), ladite gaine élastique (59) étant formée avec une lèvre périphérique externe (60) qui est en contact étroit avec au moins l'une des surfaces de serrage dudit échelon (55) et dudit actionneur (39), et de ladite lèvre périphérique interne (61).

4. Structure de joint d'étanchéité dans un système de régulation d'admission de dérivation selon la revendication 3, dans laquelle ladite plaque de renforcement (58) est réalisée avec une résine synthétique et prévue avec un alésage d'ancrage (62) dans lequel ladite gaine élastique (59) est chargée.
